(19) Europäisches Patentamt
European Patent Office
Office européen des brevets

(11) **EP 4 227 707 A1**

(12) **EUROPÄISCHE PATENTANMELDUNG**

(43) Veröffentlichungstag:
**16.08.2023 Patentblatt 2023/33**

(21) Anmeldenummer: **23153935.4**

(22) Anmeldetag: **30.01.2023**

(51) Internationale Patentklassifikation (IPC):
*G01S 7/48* (2006.01)   *G01S 17/42* (2006.01)
*G01S 17/46* (2006.01)   *G01S 17/89* (2020.01)
*G01S 17/931* (2020.01)   *G01C 21/34* (2006.01)

(52) Gemeinsame Patentklassifikation (CPC):
**G01S 17/42; G01C 21/34; G01S 7/4808;
G01S 17/46; G01S 17/89; G01S 17/931**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **11.02.2022 DE 102022201421**

(71) Anmelder: **Robert Bosch GmbH
70442 Stuttgart (DE)**

(72) Erfinder:
• **Scherer, Sebastian
72074 Tuebingen (DE)**
• **Biber, Peter
72119 Ammerbuch (DE)**
• **Kurz, Gerhard
76131 Karlsruhe (DE)**

(54) **VERFAHREN ZUM BESTIMMEN EINER POSITION UND/ODER ORIENTIERUNG EINES MOBILEN GERÄTS IN EINER UMGEBUNG**

(57) Die Erfindung betrifft ein Verfahren zum Bestimmen einer Position und/oder Orientierung eines mobilen Geräts (100) in einer Umgebung (150), in der sich das mobile Gerät (100) bewegt oder bewegen soll, umfassend ein Erhalten einer aktuellen ersten Menge von Punkten erster Art in der Umgebung, die ausgehend von und relativ zu dem mobilen Gerät, bestimmt worden sind; ein Erhalten einer aktuellen zweiten Menge mit einem oder mehreren Punkten zweiter Art in der Umgebung, die ausgehend von und relativ zu dem mobilen Gerät bestimmt worden sind; und ein Bestimmen einer aktuellen Position und/oder Orientierung des mobilen Geräts (100) in der Umgebung (150), indem die erste Menge mit einer ersten Referenzmenge von Punkten erster Art und zugleich die zweite Menge mit einer zweiten Referenzmenge mit einem oder mehreren Punkten zweiter Art, insbesondere im Rahmen einer Optimierung, zur Übereinstimmung gebracht wird. Die Erfindung betrifft auch ein mobiles Gerät (100).

**Fig. 1**

EP 4 227 707 A1

**Beschreibung**

Die vorliegende Erfindung betrifft ein Verfahren zum Bestimmen einer Position und/oder Orientierung eines mobilen Geräts, z.B. eines sich teilweise automatisiert bewegenden Fahrzeugs oder eines Roboters, in einer Umgebung, eine Recheneinheit und ein Computerprogramm zu dessen Durchführung sowie ein solches mobiles Gerät.

Hintergrund der Erfindung

Mobile Geräte wie z.B. sich zumindest teilautomatisiert bewegende Fahrzeuge oder Roboter bewegen sich typischerweise entlang eines Bewegungspfades in einer Umgebung wie z.B. einer Wohnung, in einem Garten, in einer Fabrikhalle oder auf der Straße, in der Luft oder im Wasser. Hierzu ist es nötig, dass eine aktuelle Position und/oder Orientierung (auch als Pose bezeichnet) des mobilen Geräts bekannt ist und auch immer wieder neu bestimmt wird. Hierzu kann z.B. auf eine Laserentfernungsmessung (z.B. mit sog. Lidar-Sensoren) zurückgegriffen werden.

Offenbarung der Erfindung

Erfindungsgemäß werden ein Verfahren zum Bestimmen einer Position und/oder Orientierung eines mobilen Geräts, eine Recheneinheit und ein Computerprogramm zu dessen Durchführung sowie ein solches mobiles Gerät mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit dem Bestimmen einer (aktuellen) Position und/oder Orientierung (auch als Pose bezeichnet) eines mobilen Geräts in einer Umgebung, also insbesondere der Lokalisierung des mobilen Geräts. Als mobiles Gerät kommt hier z.B. ein sich zumindest teilweise automatisiert bewegendes Fahrzeug, insbesondere ein Personenbeförderungsfahrzeug oder Güterbeförderungsfahrzeug (z.B. Gabelstapler, Flurförderfahrzeug), oder ein Roboter, in Betracht. Dabei wird auf das Prinzip der Entfernungsmessung mittels Laser (Laserentfernungsmessung, z.B. mit sog. Lidar-Sensoren) zurückgegriffen. Einer oder ggf. mehrere solcher Lidar-Sensoren sind hierzu typischerweise an oder in dem mobilen Gerät vorgesehen, womit Entfernungen (Abstände) von Objekten in der Umgebung (relativ) zum mobilen Gerät (bzw. zum Sensor) bestimmt werden können. Typischerweise scannt ein solcher Lidar-Sensor die Umgebung vor dem mobilen Gerät in einem gewissen Winkel, z.B. 90°, 180°, 270° oder auch mehr ab.

Eine eher historische und heutzutage zunehmend als veraltet anzusehende Möglichkeit zur Laserentfernungsmessung und darauf basierenden Lokalisierung (Laserlokalisierung) basiert auf der ausschließlichen Verwendung von sog. Reflektormarkern, die flächendeckend in der Umgebung angebracht werden müssen. Diese Reflektormarker können vom Laserscanner bzw. Lidar-Sensor dadurch erkannt werden, dass auf ihnen gemessene Punkte mit deutlich höherer Intensität reflektiert werden als in der restlichen Umgebung. Laserscanner können die Reflektormarker z.B. auf Wunsch selbst erkennen, d.h. es können z.B. direkt nur Messwerte berücksichtigt werden, die einer gewissen Intensität (z.B. höher als ein bestimmter Schwellwert) entsprechen.

Sind die Reflektormarker einmal angebracht, kann deren Position manuell vermessen und in eine Karte eingetragen werden. Während der Lokalisierung können die Positionen erkannter Reflektormarker ständig mit den (dann genau bekannten) Positionen der Reflektormarker in der Karte verglichen werden. Sofern stets mindestens zwei der kartierten Reflektormarker erkannt werden, kann die Pose (Position und Orientierung) des Laserscanners eindeutig bestimmt werden. Dabei soll insbesondere angenommen werden, dass sich das mobile Gerät sowie der Laserscanner in einer 2D-Ebene bewegen, also lediglich über drei Freiheitsgrade (zwei translatorische und ein rotatorischer Freiheitsgrad) verfügen. Grundsätzlich ist das Prinzip aber z.B. auch in 3D anwendbar.

Die Anbringung und Vermessung von Reflektormarkern sind allerdings in der Regel sehr aufwändig. Die Rechenleistung von Recheneinheiten oder Rechensystemen, selbst bei eingebetteten Computersystemen wie sie z.B. bei mobilen Geräten verwendet werden, ist in letzter Zeit deutlich angestiegen. Dies hat dazu geführt, dass sich in den letzten Jahren die Lokalisierung (Bestimmung von Position und/oder Orientierung) von mobilen Geräten unter Verwendung natürlicher Konturen mit Hilfe des sog. "Scan Matching" durchgesetzt hat. Reflektormarker sind dadurch verdrängt worden.

Beim "Scan Matching" (Angleichen von Scans) wird insbesondere die gesamte vom Laserscanner gemessene bzw. erfasste Punktwolke verwendet; bei einer Punktwolke handelt es sich um eine Menge von Punkten in der Umgebung, die mittels des Laserscanners bzw. Lidar-Sensors bestimmt werden. Dabei kann jedem Punkt ein Abstand zum mobilen Gerät bzw. Laserscanner zugeordnet werden, ebenso eine Orientierung relativ zu einer Referenzorientierung des mobilen Geräts bzw. Laserscanner. Die Punktwolke entspricht üblicherweise einer oder mehreren "Punktlinien" entlang der Kontur der Objekte im Sichtbereich; ggf. können die Punkte aber auch nur näherungsweise auf einer solchen Linie liegen.

Diese Punktwolke allein erlaubt aber noch nicht, eine Position und/oder Orientierung des mobilen Geräts in der Umgebung zu bestimmen. Hierzu wird die Punktwolke bzw. Menge von Punkten mit einer Referenzpunktwolke bzw.

Referenzmenge von Punkten verglichen. Es kann dann eine Transformation bestimmt werden, die die Punktwolke (bzw. Menge von Punkten) mit der Referenzpunktwolke (bzw. Referenzmenge von Punkten) am besten zur Deckung bzw. in Übereinstimmung bringt, d.h. beide aneinander angleicht. Diese Transformation entspricht dann einer Position und/oder Orientierung des mobilen Geräts bei Erfassung der Punktwolke relativ zur Referenzpunktwolke bzw. einem Koordinatensystem der Referenzpunktwolke. Wenn es sich bei der Referenzpunktwolke um eine Karte der Umgebung oder zumindest eines Teils davon handelt, so kann die aktuelle Position und/oder Orientierung des mobilen Geräts in der Umgebung bestimmt werden. Die Referenzpunktwolke (bzw. Karte der Umgebung) kann z.B. durch ständiges bzw. wiederholtes Hinzufügen neuer Punktwolken oder Teilen davon erweitert werden.

In diesem Zusammenhang wird auch von SLAM gesprochen. Als SLAM ("Simultaneous Localization and Mapping", in etwa: Simultane Positionsbestimmung und Kartierung) wird ein Verfahren in der Robotik bezeichnet, bei dem ein mobiles Gerät wie ein Roboter gleichzeitig eine Karte seiner Umgebung erstellen und seine räumliche Lage innerhalb dieser Karte schätzen kann oder muss. Es dient damit z.B. dem Erkennen von Hindernissen und unterstützt somit die autonome Navigation.

Um auf diese Weise die Position und/oder Orientierung des mobilen Geräts in der Umgebung hinreichend genau bestimmen zu können, sollte die Umgebung über ausreichend viele charakteristische Konturen verfügen, die sich in entsprechenden Punkten der Punktwolke niederschlagen, um das dem "Scan Matching" zugrundeliegenden Problem in allen drei Freiheitsgraden eindeutig eingrenzen zu können. Wie sich gezeigt hat, gibt es jedoch Fälle, in denen dies nicht der Fall ist.

Vor diesem Hintergrund wird vorgeschlagen, Mengen verschiedener Arten von Punkten zu verwenden, insbesondere solche Punkte, die Reflektormarkern oder anderen Markern entsprechen, sowie andere Punkte, die nicht von solchen Markern stammen.

Hierbei wird (z.B. in einem oder für einen Scan) eine aktuelle erste Menge von Punkten erster Art in der Umgebung bereitgestellt oder erhalten, die ausgehend von und relativ zu dem mobilen Gerät bestimmt worden sind. Hierzu kann eine Entfernungsmessung (bspw. das schon erwähnte Laserscanning) verwendet werden, also z.B. mittels eines an oder in dem mobilen Gerät vorgesehenen Lidar-Sensors. Außerdem wird (z.B. in oder für den Scan) eine aktuelle zweite Menge mit einem oder mehreren Punkten zweiter Art in der Umgebung bereitgestellt oder erhalten, die ebenfalls ausgehend von und relativ zu dem mobilen Gerät bestimmt worden sind. Auch hier kann eine Entfernungsmessung verwendet werden, und zwar insbesondere mittels derselben Laserscanners bzw. Lidar-Sensors wie für die Punkte erster Art.

Bei den Punkten zweiter Art handelt es sich dann insbesondere um solche, die einer bei der Entfernungsmessung bestimmten Lichtintensität entsprechen, die oberhalb eines Schwellwerts liegt, und bei den Punkten erster Art hingegen um solche, die einer bei der Entfernungsmessung bestimmten Lichtintensität entsprechen, die unterhalb eines Schwellwerts liegt. Der Schwellwert kann z.B. fest vorgegeben sein. Eine Unterscheidung kann aber auch anderweitig getroffen werden, z.B. mit einem Schwellwert, der abhängig von dem Median oder Mittelwert aller Intensitäten eines Scans ist, oder mittels Maschinenlernalgorithmen. Besonders zweckmäßig ist aber auch, dass ein Intensitätssprung am Rand des Markers berücksichtigt wird, auf gleicher räumlicher Ebene, von niedrig (dort, wo kein Marker ist) auf hoch (dort wo der Marker beginnt) und wieder auf niedrig (dort, wo der Marker wieder zu Ende ist).

Die Punkte zweiter Art können also vordefinierten Markern wie z.B. den erwähnten Reflektormarkern in der Umgebung, entsprechen, die Punkte erster Art hingegen anderen Objekten in der Umgebung als den vordefinierten Markern. Dabei ist zu beachten, dass - z.B. je nach Größe oder Grad der Erfassung eines Markers - einer oder auch mehrere Punkte zweiter Art einem einzelnen Marker entsprechen können. Es können in der betreffenden Menge Punkte zweiter Art vorhanden sein, die einem oder mehreren Markern entsprechen. Bei mehreren Markern sind dann notwendigerweise mehrere Punkte zweiter Art vorhanden.

Eine aktuelle Position und/oder Orientierung des mobilen Geräts in der Umgebung wird dann basierend auf der aktuellen ersten Menge, der aktuellen zweiten Menge, einer ersten Referenzmenge von Punkten erster Art und einer zweiten Referenzmenge mit einem oder mehreren Punkten zweiter Art bestimmt. Dies erfolgt derart, dass die erste Menge mit der ersten Referenzmenge von Punkten erster Art und zugleich die zweite Menge mit der zweiten Referenzmenge mit dem einem oder den mehreren Punkten zweiter Art, insbesondere im Rahmen einer Optimierung, zur Übereinstimmung gebracht wird. Es versteht sich, dass - wie z.B. für eine Optimierung üblich - in der Regel keine exakte Übereinstimmung erreicht wird bzw. werden muss; vielmehr wird lediglich versucht, eine möglichst gute Übereinstimmung zu erreichen. Eine solche Referenzmenge von Punkten wird im Zusammenhang mit der Bestimmung von Position und/oder Orientierung (Posenschätzung) oftmals auch als "lokale Karte" bezeichnet, wie später noch näher erläutert wird. Basierend auf der aktuellen Position und/oder Orientierung des mobilen Geräts kann dann auch ein Bewegungspfad bestimmt werden, auf dem sich das mobile Gerät in der Umgebung bewegen soll. Hierzu können, basierend auf dem Bewegungspfad sowie der aktuellen Position und/oder Orientierung, Steuerungsinformationen zum Bewegen des mobilen Geräts bestimmt werden; die Steuerungsinformationen können dann bereitgestellt werden bzw. das mobile Gerät kann basierend auf den Steuerungsinformationen bewegt werden.

Die aktuelle Position und/oder Orientierung des mobilen Geräts in der Umgebung kann, insbesondere bei nicht automatisierten mobilen Geräten, z.B. auch zur Nachverfolgung ("Tracken") des mobilen Geräts verwendet werden. So kann z.B. bestimmt werden, wo sich ein Gabelstapler oder anderes mobiles Gerät gerade innerhalb einer Fabrikhalle befindet.

Das "Scan Matching" (mit natürlichen Konturen von Objekten in der Umgebung, Punkte erster Art) wird hier also mit der Idee der Reflektormarker bei der Laserentfernungsmessung (oder allgemein Punkte zweiter Art) kombiniert, um die Vorteile aus beiden Ansätzen zu kombinieren und die Nachteile beider Ansätze auszugleichen. Dabei kann sich z.B. grundsätzlich auf die Lokalisierung mittels "Scan Matching" verlassen werden, zumindest dort, wo dies ausreichend zuverlässig funktioniert; dies ist typischerweise in mehr als 95% der Umgebungen der Fall. Falls in der gewünschten Umgebung allerdings problematische Stellen anzutreffen sind, kann ein Benutzer z.B. eine gewisse Zahl an Reflektormarkern anbringen, durch deren Verwendung dann an dieser Stelle das möglicherweise zuvor mehrdeutige Ergebnis des "Scan Matching" eindeutig wird. Solche problematischen Stellen können beispielsweise strukturarme Gänge, Bereiche mit unebenem Boden oder Umgebungen mit sehr vielen dynamischen Objekten sein.

Der Vorteil im Vergleich zur Lokalisierung ohne Reflektormarker ist eine deutlich verbesserte Zuverlässigkeit des Lokalisierungsergebnisses an problematischen Stellen. Der Vorteil im Vergleich zu klassischen reinen reflektormarkerbasierten Lokalisierung ist der deutlich geringere Aufwand bei der Anbringung von Markern. Anstelle einer hohen Anzahl an Markern auf der ganzen Fläche müssen z.B. nur wenige Marker an kritischen Stellen angebracht werden.

Vorzugsweise werden die erste Menge mit der ersten Referenzmenge und zugleich die zweite Menge mit der zweiten Referenzmenge zur Übereinstimmung gebracht, indem eine Transformation bestimmt wird, die die erste Menge auf die erste Referenzmenge und zugleich die zweite Menge auf die zweite Referenzmenge abbildet, wobei die aktuelle Position und/oder Orientierung des mobilen Geräts in der Umgebung basierend auf der Transformation bestimmt wird. In der Praxis wird hierbei oft keine Transformation gefunden werden, die eine exakte Abbildung der Mengen aufeinander bewirkt; vielmehr geht es um eine - im Rahmen einer zeitlich begrenzten Optimierung - bestmögliche Transformation. Insbesondere werden beim Bestimmen der Transformation Punkte zweiter Art höher gewichtet als Punkte erster Art, zumal diese typischerweise deutlich genauer sind. Es können also zwei Mengen verschiedenartiger Punkte während eines "Scan Matching"-Prozesses innerhalb eines Laserlokalisierungssystems gleichzeitig behandelt werden, also alle herkömmlichen Punkte (Punkte erster Art) auf natürlichen Konturen einerseits, und Punkte auf erkannten Reflektormarkern (Punkte zweiter Art) andererseits.

Während selbst das beste "Scan Matching"-Ergebnis unter alleiniger Verwendung von Konturpunkten (Punkte erster Art) in vielen Fällen uneindeutig sein kann - zum Beispiel die Position in einem langen Gang, von dem lediglich zwei parallele Linien gesehen werden, wodurch nicht sicher erkannt werden kann, wo genau entlang des Ganges sich die Position befindet - kann die Hinzuziehung von auf Reflektormarkern erkannten Punkten (Punkte zweiter Art) zu einem eindeutigen Ergebnis führen. Die Punkte von Reflektormarkern können hierbei neben allen (anderen) Punkten wie eine zweite Schicht bzw. Ebene von Punkten behandelt werden. Das "Scan Matching"-Problem wird dann unter Berücksichtigung beider Mengen von Punkten gleichzeitig gelöst.

Als "Scan Matching"-Verfahren, d.h. ein Verfahren, bei dem die erste bzw. zweite Menge auf die erste bzw. zweite Referenzmenge abgebildet werden, bzw. bei denen eine Transformation bestimmt wird, die diese Abbildung bewirkt, kommen grundsätzlich verschiedene Arten von Methoden bzw. Verfahren in Betracht. Beispielsweise können dies das sog. "Iterative Closest Point"-Verfahren (ICP) oder das "Normal Distributions Transform"-Verfahren (NDT) sein, vgl. P. Biber and W. Strasser, "The normal distributions transform: a new approach to laser scan matching," Proceedings 2003 IEEE/RSJ International Conference on Intelligent Robots and Systems (IROS 2003) (Cat. No.03CH37453), 2003, pp. 2743-2748 vol.3, doi: 10.1109/IROS.2003.1249285. Vorzugsweise wird für beide Abbildungen aber dasselbe Verfahren verwendet. Letzteres soll in Bezug auf die Figurenbeschreibung näher erläutert werden.

Bei der sog. inkrementellen relativen Posenschätzung (Schätzung bzw. Bestimmung von Position und/oder Orientierung) wird der aktuelle Scan vorzugsweise nicht einfach mit seinem Vorgängerscan verglichen, sondern stattdessen mit einer sog. "lokalen Karte" - im Rahmen der vorliegenden Erfindung auch als Referenzmenge oder Referenzpunktwolke bezeichnet. Mit anderem Worten muss die Referenzmenge nicht dem vorhergehenden Scan etnsprechen. Diese "lokale Karte" bzw. die Referenzmenge kann im einfachsten Fall aus einem einzigen repräsentativen Scan, einem "Base Scan" ,bestehen, der nicht in jedem Schritt bzw. bei jedem neuen Scan, sondern nur nach einer gewissen Heuristik (z.B. zurückgelegte Strecke, Qualität des "Scan Matching"-Ergebnisses) durch den aktuellen Scan ersetzt wird.

Außerdem kann es vorteilhaft sein, wenn diese "lokale Karte" bzw. Referenzmenge nicht nur aus einem "Base Scan", sondern aus mehreren Scans oder "Base Scans" besteht oder daraus gebildet wird. Denn in nur einem "Base Scan" könnten relevante geometrische Strukturen unter Umständem nicht enthalten weil, weil sie temporär (bei der Aufnahme des Scans) nicht sichtbar waren bzw. sind, z.B. wegen Verdeckung. Die Beibehaltung mehrere vorangegangener (n > 1) letzten "Base Scans" in der "lokalen Karte" verringert dieses Risiko und erhöht damit die Robustheit der Posenschätzung.

Es hat sich herausgestellt, dass es vor allem bei der Verwendung mit Reflektormarkern (aber auch im klassischen Fall ohne Reflektormarker) vorteilhaft ist, die Entscheidung darüber, ob der aktuelle Scan zu einem neuen "Base Scan" in der "lokalen Karte" werden soll, vom Anteil der erfolgreich mit der "lokalen Karte" gematchten bzw. in Übereinstimmung gebrachten Punkte abhängig zu machen:
Wurden z.B. nur zwei von drei im aktuellen Scan erkannte Reflektormarker erfolgreich gematcht, beinhaltet der aktuelle Scan wahrscheinlich einen neuen erkannten Reflektormarker, der noch nicht in der "lokalen Karte" (hier in der zweiten Referenzmenge) enthalten ist. Der Scan (also die aktuelle erste Menge und/oder die aktuelle zweite Menge) sollte daher zur lokalen Karte (hier dann also die erste Referenzmenge und/oder die zweite Referenzmenge) hinzugefügt werden. Wird der Reflektormarker nur unzuverlässig erkannt (z.B. in jedem zweiten Scan), könnte es ohne eine solche Heuristik dazu kommen, dass dieser Reflektormarker nie in die lokale Karte aufgenommen wird und dadurch nie im "Scan Matching" berücksichtigt würde.

Diese Heuristik kann auch auf den herkömmlichen Teil der Punkte (also die Punkte erster Art) angewendet werden und sagt dann aus, dass der aktuelle Scan wahrscheinlich Informationen über einen Teil der Umgebungsgeometrie enthält, der noch nicht in der lokalen Karte (hier dann insbeosndere die erste Referenzmenge) enthalten ist. Er sollte dann auch in die lokale Karte aufgenommen werden.

Es können also Kriterien definierte werden, wann zumindest Teile der ersten bzw. zweiten aktuellen Menge der jeweiligen Referenzmenge hinzugefügt werden. Vorzugsweise wird also zumindest ein Teil der Punkte der aktuellen ersten Menge zur ersten Referenzmenge hinzugefügt, wenn zumindest ein erstes Kriterium erfüllt ist. Das erste Kriterium kann z.B. bedingen, dass ein Anteil von Punkten erster Art der aktuellen ersten Menge, der auch in der ersten Referenzmenge enthalten ist, unterhalb eines vorgegebenen ersten Schwellwerts liegt. Dies kann z.B. dadurch erkannt werden, dass der Anteil an Punkten erster Art, die beim Normal Distributions Transform"-Verfahren zu einer gültigen NDT-Zelle assoziiert werden konnten, unterhalb eines vorgegebenen ersten Schwellwerts liegt.. Damit kann die erste Referenzmenge - und damit also letztlich auch die eigentliche Karte der Umgebung - erweitert werden. Mit jeder neuen, aktuellen ersten Menge kann dann also die Karte der Umgebung ggf. immer weiter verbessert werden. Entsprechend wird vorzugsweise zumindest der eine Punkt oder zumindest ein Teil der mehreren Punkte der aktuellen zweiten Menge zur zweiten Referenzmenge hinzugefügt, wenn zumindest ein zweites Kriterium erfüllt ist. Das zweite Kriterium kann z.B. bedingen, dass ein Anteil von Punkten zweiter Art der aktuellen zweiten Menge, der auch in der zweiten Referenzmenge enthalten ist, unterhalb eines vorgegebenen zweiten Schwellwerts liegt. Dies kann z.B. dadurch erkannt werden, dass der Anteil an Punkten zweiter Art, die beim "Normal Distributions Transform"-Verfahren zu einer gültigen NDT-Zelle assoziiert werden konnten, unterhalb eines vorgegebenen zweiten Schwellwerts liegt. Wie vorstehend erläutert, können auch wieder Punkte aus der Referenzmenge herausgenommen werden oder die Referenzmenge kann ganz durch den neuen Scan ersetzt werden.

Es ist auch von Vorteil, wenn das Bestimmen der aktuellen Position und/oder Orientierung des mobilen Geräts in der Umgebung nur dann umfasst, dass die erste Menge mit der ersten Referenzmenge und zugleich die zweite Menge mit der zweiten Referenzmenge zur Übereinstimmung gebracht wird, wenn ein drittes Kriterium erfüllt ist. Dieses dritte Kriterium kann z.B. fordern, dass überhaupt ein Punkt zweiter Art in der aktuellen Messung vorhanden ist oder dass z.B. zumindest zwei Punkte zweiter Art vorhanden sind (wie später noch erläutert wird, kann grundsätzlich aber auch mit nur einem Punkt zweiter Art gearbeitet werden). Alternativ oder zusätzlich kann das dritte Kriterium z.B. fordern, dass sich das mobile Gerät innerhalb eines bestimmten Bereichs der Umgebung, z.B. einem solchen, in dem bekannt ist, dass Reflektormarker vorhanden sind, aufhält. Wenn das dritte Kriterium nicht erfüllt ist, umfasst das Bestimmen der aktuellen Position und/oder Orientierung des mobilen Geräts in der Umgebung (nur), dass die erste Menge mit der ersten Referenzmenge zur Übereinstimmung gebracht wird, also wie bei herkömmlichem "Scan-Matching" (ohne Reflektormarker oder ähnlichem).

Eine erfindungsgemäße Recheneinheit, z.B. ein Steuergerät eines Roboters, ist, insbesondere programmtechnisch, dazu eingerichtet, ein erfindungsgemäßes Verfahren durchzuführen.

Die Erfindung betrifft auch ein mobiles Gerät mit einer erfindungsgemäßen Recheneinheit. Vorzugsweise ist das mobile Gerät als sich zumindest teilweise automatisiert bewegendes Fahrzeug, insbesondere als Personenbeförderungsfahrzeug oder als Güterbeförderungsfahrzeug, oder als Roboter, ausgebildet.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Figurenbeschreibung

Figur 1    zeigt schematisch ein mobiles Gerät in einer Umgebung, bei dem ein erfindungsgemäßes Verfahren durchführbar ist.

Figur 2    zeigt schematisch Referenzmengen von Punkten, wie sie bei einem erfindungsgemäßen Verfahren in einer bevorzugten Ausführungsform auftreten können.

Figur 3    zeigt schematisch Mengen von Punkten, wie sie bei einem erfindungsgemäßen Verfahren in einer bevorzugten Ausführungsform auftreten können.

Figur 4    zeigt schematisch einen Ablauf eines erfindungsgemäßen Verfahrens in einer bevorzugten Ausführungsform.

Detaillierte Beschreibung der Zeichnung

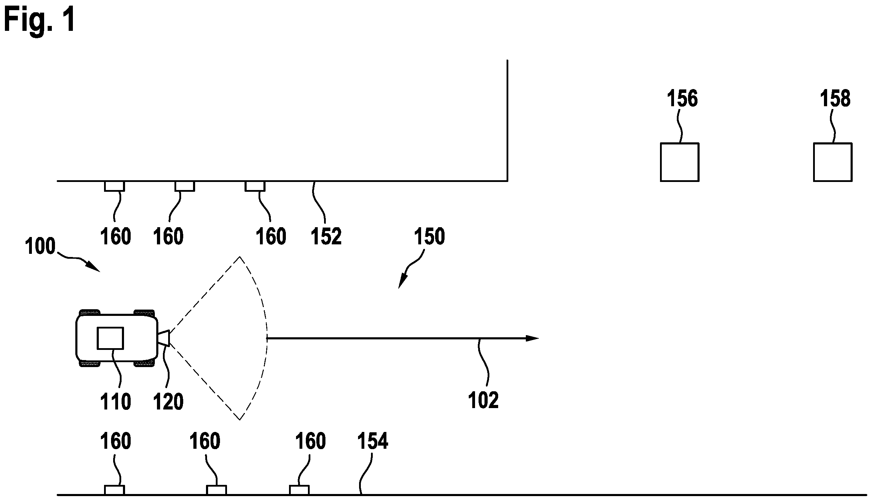

In Figur 1 ist schematisch ein mobiles Gerät 100 in einer Umgebung 150 dargestellt, bei dem ein erfindungsgemäßes Verfahren durchführbar ist. Bei dem mobilen Gerät 100 handelt es sich z.B. um einen Roboter oder ein automatisiert (bzw. autonom) fahrendes Fahrzeug, mit einer Recheneinheit 110 sowie einem Lidar-Sensor 120 zur Laserentfernungsmessung; ein Erfassungsbereich des Lidar-Sensors 120 ist beispielhaft gestrichelt angedeutet.

Bei der Umgebung 150 handelt es sich beispielhaft um das Innere eines Gebäudes mit einem z.B. längeren Flur, von links in der Figur 1 beginnend, mit Seitenwänden 152 und 154. Der Flur weitet sich, nach rechts in der Figur 1 hin, auf der Seite der Seitenwand 152 hin auf, es sind zwei Säulen 156 und 158 vorgesehen. An den Seitenwänden 152 und 154 sind beispielhaft jeweils drei Reflektormarker 160 vorgesehen.

Das mobile Gerät 100 soll sich nun z.B. entlang des Bewegungspfades 102 in der Umgebung 150 bewegen. Hierzu ist die Kenntnis der aktuellen Position und/oder Orientierung des mobilen Geräts 100 erforderlich, um bestimmen zu können, wie das mobile Gerät 100 angesteuert werden muss, um dem Bewegungspfad 102 folgen zu können, oder auch, um zunächst den Bewegungspfad 102 planen zu können. Wie erwähnt, kann die Kenntnis der aktuellen Position und/oder Orientierung auch (nur) der Nachverfolgung des mobilen Geräts dienen.

Hierzu kann mittels des Lidar-Sensors 120 die Umgebung 150 abgescannt werden. Dabei wird der Laserscanner im Lidar-Sensor bewegt, während mittels ausgesendeter Laserstrahlen und empfangener, reflektierter Strahlung eine Vielzahl an Punkten erhalten wird; jeder Punkt steht dabei für einen Punkt oder eine kleine Fläche in der Umgebung, dort z.B. an einem Objekt, von dem eine reflektierte Strahlung empfangen wird.

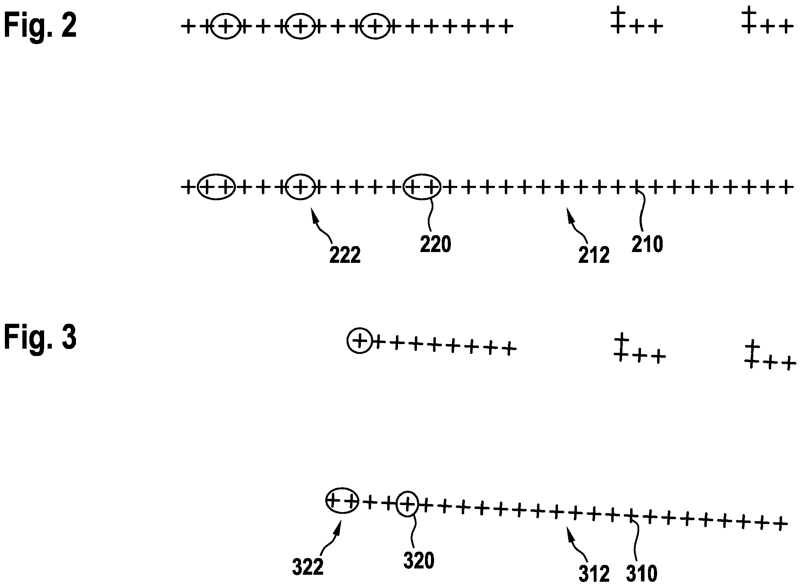

In Figur 2 sind hierzu für die Umgebung 150 aus Figur 1 beispielhaft Punkte dargestellt, wie sie mittels Laserentfernungsmessung grundsätzlich erhalten werden können. Dabei gibt es Punkte 210 erster Art, die durch Reflexion der Laserstrahlen an z.B. den Seitenwänden 152, 154 sowie den Seitenflächen der Säulen 156, 158 entstehen bzw. erhalten werden. Diese Punkte 210 erster Art sind mittels kleiner Kreuze dargestellt. Außerdem gibt es Punkte 220 zweiter Art, die durch Reflexion der Laserstrahlen an den Reflektormarkern 160 entstehen bzw. erhalten werden. Diese Punkte 220 zweiter Art sind mittels Kreisen dargestellt. Wie erwähnt, können je Reflektormarker 160 auch mehrere Punkte zweiter Art vorhanden sein.

Diese beiden Arten von Punkten lassen sich unterscheiden, da die von den Reflektormarkern reflektierte Strahlung aufgrund der entsprechenden Ausbildung der Reflektormarker (z.B. als Spiegel) im Lidar-Sensor eine deutlich höhere Lichtintensität erzeugt als die von den übrigen Objekten in der Umgebung reflektierte Strahlung, wo die Laserstrahlung zumeist diffus gestreut wird.

Die in Figur 2 gezeigten Punkte bilden zumindest im Wesentlichen die Umgebung 150 aus Figur 1 ab; es handelt sich um mehr Punkte als aus Sicht des mobilen Geräts 100 an der in Figur 1 gezeigten Position erfasst werden können. Diese Punkte können als Referenz oder Karte der Umgebung 150 dienen; sie kann z.B. über mehrere Erfassungszyklen hinweg erhalten worden sein. Hierzu können die Punkte 210 erster Art zu einer ersten Referenzmenge 212 zusammengefasst werden, die Punkte 220 zweiter Art zu einer zweiten Referenzmenge 222.

In Figur 3 sind für die Umgebung 150 aus Figur 1 ebenfalls beispielhaft Punkte dargestellt, wie sie mittels Laserentfernungsmessung grundsätzlich erhalten werden können. Dabei gibt es Punkte 310 erster Art, die durch Reflexion der Laserstrahlen an z.B. den Seitenwänden 152, 154 sowie den Seitenflächen der Säulen 156, 158 entstehen bzw. erhalten werden. Diese Punkte 310 erster Art sind mittels kleiner Kreuze dargestellt. Außerdem gibt es Punkte 320 zweiter Art, die durch Reflexion der Laserstrahlen an den Reflektormarkern 160 entstehen bzw. erhalten werden. Diese Punkte 320 zweiter Art sind mittels Kreisen dargestellt.

Anders als in Figur 2, handelt es sich bei denen in Figur 3 gezeigten Punkte nur um diejenigen Punkte, die aus Sicht des mobilen Geräts 100 an der in Figur 1 gezeigten Position und auch in etwa der dort gezeigten Orientierung erfasst werden können. Diese Punkte können als aktuelle Punkte angesehen werden, wie sie an einer bestimmten Position mit bestimmter Orientierung des Geräts erfasst bzw. erhalten werden können. Die Punkte 310 erster Art können zu einer ersten Menge 312 zusammengefasst werden, die Punkte 320 zweiter Art zu einer zweiten Menge 322.

Um nun die Position und Orientierung des mobilen Geräts in der Situation der Figur 3 zu bestimmen, sollen die erste Menge 312 mit der ersten Referenzmenge 212 sowie die zweite Menge 322 mit der zweiten Referenzmenge 222 zur Überlappung bzw. Übereinstimmung gebracht werden. Eine Transformation, die angewendet auf die erste bzw. zweite Menge die entsprechenden Punkte auf die erste bzw. zweite Referenzmenge abbildet, ergibt die Position und Orientierung des mobilen Geräts in der Situation der Figur 3 relativ zu der Situation in Figur 2.

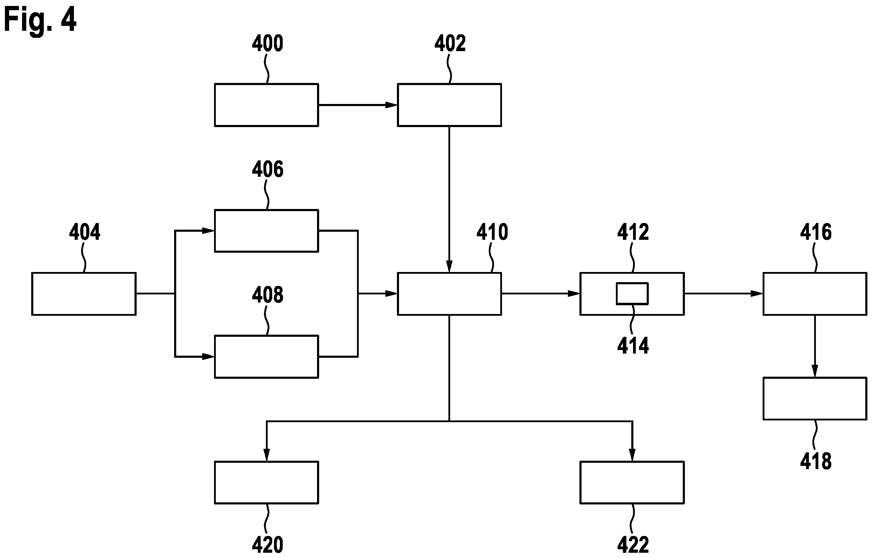

In Figur 4 ist nun ein erfindungsgemäßes Verfahren in einer bevorzugten Ausführungsform anhand eines Ablaufdiagramms schematisch dargestellt. In einem neuen Messzyklus können vorzugsweise zunächst, in einem Schritt 400, Informationen z.B. aus Odometrie und/oder Inertialsensoren erhalten bzw. erfasst werden, die es erlauben, in einem Schritt 402, die aktuelle Position und/oder Orientierung (zumindest grob) zu schätzen. Dies ist z.B. möglich, da mittels Odometrie bestimmt werden kann, wie viel sich die Position relativ zur letzten bekannten Position geändert hat; mittels Inertialsensoren kann dies für die Orientierung bestimmt werden. Wenn solche Informationen nicht vorhanden sind oder nicht verwendet werden können oder sollen, kann die aktuelle Position und/oder Orientierung aber z.B. auch anhand von Erfahrungswerten geschätzt werden. Diese geschätzte aktuelle Position und/oder Orientierung kann dann für das nachfolgende "Scan Matching"-Verfahren verwendet werden. Ebenso kann aber die zuletzt bekannte Position und/oder Orientierung für das nachfolgende "Scan Matching"-Verfahren verwendet werden.

Weiterhin wird in einem Schritt 404 ein Scan mittels des Lidar-Sensors durchgeführt. Dabei wird, in Schritt 406, die aktuelle erste Menge 312 von Punkten 310 erster Art erhalten. In Schritt 408 wird die aktuelle zweite Menge 322 mit einem oder mehreren Punkten 320 (in dem gezeigten Beispiel in Figur 3 sind es drei Punkte) zweiter Art erhalten.

Es wird dann, in Schritt 410, ein "Scan Matching"-Verfahren angewendet. Hierbei wird auf die geschätzte oder ggf. zuletzt bekannte Position und/oder Orientierung zurückgegriffen. Wie schon erwähnt, gibt es verschiedene sogenannte "Scan Matching"-Verfahren (oder auch Verfahren zur Registrierung von Punktwolken), von denen die meisten entweder auf dem "Iterative Closest Point"-Verfahren (ICP) oder dem "Normal Distributions Transform"-Verfahren (NDT) basieren. Nachfolgend soll das NDT-Verfahren zum "Scan Matching" als Beispiel näher erläutert werden.

Zunächst soll kurz die Funktionsweise eines "Scan Matching"-Verfahrens an sich erläutert werden. Als Eingabe eines "Scan Matching"-Verfahrens (dies gilt im Grunde für alle "Scan Matching"-Verfahren) sind eine aktuelle Menge an Punkten bzw. eine Punktwolke $\boldsymbol{P}_A = \{\boldsymbol{p}_{A1}, ..., \boldsymbol{p}_{Ai}\}$, Referenzmenge an Punkten bzw. eine Referenzpunktwolke $\boldsymbol{P}_R = \{\boldsymbol{p}_{R1}, ..., \boldsymbol{p}_{Rj}\}$ und eine initiale Schätzung der Position und/oder Orientierung der aktuellen Punktwolke $\boldsymbol{T}_{R,A}$ relativ zur Referenzpunktwolke (oder eben ggf. die zuletzt bekannte) nötig.

Das NDT-"Scan Matching"-Verfahren überführt in einem ersten Schritt die Referenzpunktwolke in eine sog. NDT-Darstellung. Dabei handelt es sich um ein diskretisiertes Raster von Zellen (NDT-Zellen), die jeweils entweder leer sind oder die in ihnen enthaltenen Punkte durch eine multivariate Normalverteilung mit Mittelwert q und Kovarianzmatrix $\Sigma$ approximieren. Um Diskretisierungseffekte zu vermeiden ist es zweckmäßig, mehrere überlappende Raster zu verwenden.

In einem zweiten Schritt werden alle Punkte der aktuellen Punktwolke basierend auf der aktuellen bzw. initialen Schätzung der Position und/oder Orientierung (Posenschätzung) $\boldsymbol{T}_{R,A}$ in Referenzkoordinaten transformiert und mit der nächsten NDT-Zelle bzw. deren Mittelwert $q_i$ und Kovarianzmatrix $\Sigma_i$ assoziiert.

In einem dritten Schritt wird diejenige relative Position und/oder Orientierung (Pose) $\boldsymbol{T}_{R,A}$ ermittelt, die den NDT-Score maximiert:

$$\mathrm{NDT-Score} = \sum_i \exp\left(-\frac{1}{2}\left(\boldsymbol{T}_{R,A}\,\boldsymbol{p}_{A_i} - \boldsymbol{q}_i\right)^t \boldsymbol{\Sigma}_i^{-1}\left(\boldsymbol{T}_{R,A}\,\boldsymbol{p}_{A_i} - \boldsymbol{q}_i\right)\right)$$

Der zweite und dritte Schritt werden in der Regel mehrfach wiederholt, da veränderte Posenschätzungen zu anderen Assoziationen zwischen Punkten und NDT-Zellen führen können. Diejenige relative Position und/oder Orien-tierung (Pose) $\boldsymbol{T}_{R,A}$, die diesen NDT-Score maximiert, stellt dann die aktuelle Position und/oder Orientierung dar.

Nachfolgend soll nun das "Scan Matching"-Verfahren mit verschiedenen Mengen verschiedener Arten von Punkten erläutert werden, also mit regulären Punkten, d.h. einer ersten Menge und einer ersten Referenzmenge mit Punkten erster Art, und mit Punkten resultierend von Reflektormarkern, d.h. einer zweiten Menge und einer zweiten Referenzmenge mit einem oder mehreren Punkten zweiter Art.

Bei der Verwendung von Reflektormarkern stehen neben den vorstehend genannten Punkten, erste Menge $\boldsymbol{P}_A$ (312 in Figur 3) und erste Referenzmenge $\boldsymbol{P}_R$ (212 in Figur 2) - die dann als Punkte erster Art zu betrachten sind - weiterhin Punkte auf erkannten Reflektormarkern, die zweite Menge $\boldsymbol{P}_{AM} = \{\boldsymbol{p}_{AM_1}, ..., \boldsymbol{p}_{AM_k}\}$ (322 in Figur 3) und die zweite Referenzmenge (zweite Referenzpunktwolke) $P_{RM} = \{\boldsymbol{p}_{RM_1}, ..., \boldsymbol{p}_{RM_l}\}$ (222 in Figur 2) zur Verfügung, also Punkte zweiter Art. Die zweite Referenzpunktwolke bzw. zweite Referenzmenge $\boldsymbol{P}_{RM}$ wird nun analog zur ersten Referenzmenge $\boldsymbol{P}_R$ (wie vorstehend beschrieben) in eine NDT-Darstellung überführt, die nur Punkte auf Reflektormarkern repräsentiert. Die Überlagerung beider NDT-Darstellungen ist für die Referenzmengen z.B. in Figur 2 illustriert, dargestellt als Punkte. ""

Hierbei kann es vorkommen, dass nur ein Punkt auf einem Reflektormarker erkannt wird, d.h. dass es überhaupt nur einen Punkt zweiter Art in der zweiten Menge (oder ggf. auch in der zweiten Referenzmenge) gibt, oder, dass es bei mehreren Punkten zweiter Art zumindest einen gibt, der als einziger einem bestimmten Marker entspricht. Es werden mindestens drei Punkte benötigt, um für zwei Dimensionen bei der NDT-Zelle Mittelwert und Kovarianzmatrix bestimmen zu können. Allerdings können auch einzelne Punkte zweiter Art in der Referenzpunktwolke beim "Scan Matching" berücksichtigt werden. Hierzu können synthetisch weitere Punkte zweiter Art in einem kleinen Umkreis hinzugefügt werden. Alternativ dazu könnte jeder gemessene Punkt zweiter Art selbst bereits mit einer Kovarianz versehen werden, die sich zum Beispiel aus einem probabilistischen Sensormodell ergibt, was es ebenfalls erlaubt, eine NDT-Zelle aus nur einem Punkt zu befüllen. Für nähere Erläuterungen hierzu sei z.B. auf "Hong, Hyunki, and Beom Hee Lee. "Probabilistic normal distributions transform representation for accurate 3D point cloud registration." 2017 IEEE/RSJ International Conference on Intelligent Robots and Systems (IROS). IEEE, 2017." verwiesen.

Die Assoziation von Punkten, also zwischen Menge und Referenzmenge, erfolgt nun für jede Ebene, d.h. jede Art von Punkten (herkömmliche Punkte, Reflektorpunkte) getrennt. Für jeden Punkt wird die nächste Zelle in der zugehörigen NDT-Darstellung gesucht. Die Optimierung maximiert nun eine gewichtete Summe beider einzelnen NDT-Scores, was zu einem Gesamt-Score führt:

$$\text{Gesamt} - \text{Score} \; = \; \sum_i \exp\left(-\tfrac{1}{2}\left(\boldsymbol{T}_{R,A}\,\boldsymbol{p}_{A_i} - \boldsymbol{q}_i\right)^t \boldsymbol{\Sigma}_i^{-1}\left(\boldsymbol{T}_{R,A}\,\boldsymbol{p}_{A_i} - \boldsymbol{q}_i\right)\right) +$$

$$w_M \; \sum_k \exp\left(-\tfrac{1}{2}\left(\boldsymbol{T}_{R,A}\,\boldsymbol{p}_{AM_k} - \boldsymbol{q}_k\right)^t \boldsymbol{\Sigma}_i^{-1}\left(\boldsymbol{T}_{R,A}\,\boldsymbol{p}_{AM_k} - \boldsymbol{q}_k\right)\right)$$

Hierbei gibt $w_M$ den Faktor an, um wie viel stärker ein Punkt zweiter Art (Reflektorpunkt) gegenüber einem Punkt erster Art (herkömmlichen Punkt) gewichtet werden soll; z.B. kann gelten $w_M$ = 100. Damit wird der Tatsache Rechnung getragen, dass ein Punkt von einem Reflektormarker sehr genau ist.

In einem Schritt 412 kann dann die aktuelle Position und/oder Orientierung (Pose) 414 ausgegeben werden. In einem Schritt 416 kann darauf basierend auch ein Bewegungspfad bestimmt werden, worauf basierend wiederum, in Schritt 418, Steuerungsinformationen zum Bewegen des mobilen Geräts bestimmt werden, um dieses zu bewegen.

Außerdem kann, in einem Schritt 420, zumindest ein Teil der Punkte der aktuellen ersten Menge zur ersten Referenzmenge hinzugefügt werden. In einem Schritt 422 kann der eine Punkt oder zumindest ein Teil der mehreren Punkte der aktuellen zweiten Menge zur zweiten Referenzmenge hinzugefügt werden.

Für die Frage, ob ein Scan oder ein Teil davon (also zumindest ein Teil der Punkte erster Art und/oder zumindest ein Teil der Punkte zweiter Art) als neuer Referenzscan verwendet, also den betreffenden Referenzmengen und damit der (lokalen) Karte hinzugefügt werden sollte, kommen diverse verbreitete Heuristiken (Kriterien) in Betracht, z.B. ob eine gewisse Strecke zurückgelegt wurde oder ob der NDT-Score unterhalbe eines gewissen Schwellwerts liegt.

Bei der Verwendung der zusätzlichen Ebene von Reflektorpunkten (Punkten zweiter Art) hat - wie vorstehend schon ausführlicher erläutert - die folgende Heuristik großen Einfluss auf die Robustheit, vor allem wenn Reflektormarker nicht zuverlässig in jedem Scan erkannt werden: Für alle Ebenen von Punkten (herkömmliche Punkte und Reflektorpunkte), wird geprüft, ob der Anteil von Punkten, die z.B. beim NDT-"Scan Matching" zu einer gültigen NDT-Zelle assoziiert werden konnten unterhalb einem gewissen Schwellwert liegt? Falls ja, dann sollte der aktuelle Scan zur lokalen Karte hinzugefügt werden. Dies führt dazu, dass beim Auftauchen neuer Marker die lokale Karte aktualisiert wird, so dass diese Marker in Zukunft für das "Scan Matching" genutzt werden können.

**Patentansprüche**

1.  Verfahren zum Bestimmen einer Position und/oder Orientierung eines mobilen Geräts (100) in einer Umgebung (150), in der sich das mobile Gerät (100) bewegt oder bewegen soll, umfassend:

    Bereitstellen (406) einer aktuellen ersten Menge (312) von Punkten (310) erster Art in der Umgebung, die ausgehend von und relativ zu dem mobilen Gerät bestimmt worden sind,
    Bereitstellen (408) einer aktuellen zweiten Menge (322) mit einem oder mehreren Punkten (320) zweiter Art in der Umgebung, die ausgehend von und relativ zu dem mobilen Gerät bestimmt worden sind, und
    Bestimmen (410) einer aktuellen Position und/oder Orientierung (414) des mobilen Geräts (100) in der Umgebung (150), indem die erste Menge (312) mit einer ersten Referenzmenge (212) von Punkten erster Art und zugleich die zweite Menge (312) mit einer zweiten Referenzmenge (322) mit einem oder mehreren Punkten zweiter Art, insbesondere im Rahmen einer Optimierung, zur Übereinstimmung gebracht wird.

2. Verfahren nach Anspruch 1, wobei die erste Menge (312) mit der ersten Referenzmenge (212) und zugleich die zweite Menge (312) mit der zweiten Referenzmenge (322) zur Übereinstimmung gebracht wird, indem eine Transformation bestimmt wird, die die erste Menge (312) auf die erste Referenzmenge (212) und zugleich die zweite Menge (312) auf die zweite Referenzmenge (322) abbildet, und wobei die aktuelle Position und/oder Orientierung (414) des mobilen Geräts (100) in der Umgebung (150) basierend auf der Transformation bestimmt wird.

3. Verfahren nach Anspruch 2, wobei beim Bestimmen der Transformation Punkte (220, 320) zweiter Art höher gewichtet werden als Punkte (210, 310) erster Art.

4. Verfahren nach Anspruch 2 oder 3, wobei die erste Menge (312) auf die erste Referenzmenge (212) und die zweite Menge (312) auf die zweite Referenzmenge (322) jeweils mittels derselben Methode, insbesondere eines "Normal Distributions Transform"-Verfahrens, abgebildet werden.

5. Verfahren nach einem der vorstehenden Ansprüche, wobei Punkte (210, 310) erster Art und/oder Punkte (220, 320) zweiter Art mittels Entfernungsmessung, insbesondere mittels eines Lidar-Sensors (120) des mobilen Geräts (100), bestimmt werden oder worden sind, wobei vorzugsweise Punkte (220, 320) zweiter Art einer bei der Entfernungsmessung bestimmten Lichtintensität, die oberhalb eines Schwellwerts liegt, entsprechen und wobei Punkte (210, 310) erster Art einer bei der Entfernungsmessung bestimmten Lichtintensität, die unterhalb eines Schwellwerts liegt, entsprechen.

6. Verfahren nach einem der vorstehenden Ansprüche, wobei Punkte (220, 320) zweiter Art vordefinierten Markern, insbesondere Reflektormarkern, in der Umgebung entsprechen, und wobei Punkte (210, 310) erster Art anderen Objekten in der Umgebung als den vordefinierten Markern entsprechen.

7. Verfahren nach einem der vorstehenden Ansprüche, wobei zumindest ein Teil der Punkte der aktuellen ersten Menge (310) zur ersten Referenzmenge (210) hinzugefügt wird, wenn zumindest ein erstes Kriterium erfüllt ist, und/oder
wobei zumindest der eine Punkt oder zumindest ein Teil der mehreren Punkte der aktuellen zweiten Menge (320) zur zweiten Referenzmenge (220) hinzugefügt wird, wenn zumindest ein zweites Kriterium erfüllt ist.

8. Verfahren nach Anspruch 7, in Rückbezug auf Anspruch 4, wobei das wenigstens eine erste Kriterium umfasst, dass ein Anteil von Punkten erster Art der aktuellen ersten Menge, der auch in der ersten Referenzmenge enthalten ist, unterhalb eines vorgegebenen ersten Schwellwerts, und/oder
wobei das wenigstens eine zweite Kriterium umfasst, dass ein Anteil von Punkten zweiter Art der aktuellen zweiten Menge, der auch in der zweiten Referenzmenge enthalten ist, unterhalb eines vorgegebenen zweiten Schwellwerts liegt.

9. Verfahren nach einem der vorstehenden Ansprüche, wobei das Bestimmen (410) der aktuellen Position und/oder Orientierung des mobilen Geräts in der Umgebung nur dann umfasst, dass die erste Menge (312) mit der ersten Referenzmenge (212) und zugleich die zweite Menge (312) mit der zweiten Referenzmenge (322) zur Übereinstimmung gebracht wird, wenn ein drittes Kriterium erfüllt ist, und wobei, wenn das dritte Kriterium nicht erfüllt ist, das Bestimmen der aktuellen Position und/oder Orientierung des mobilen Geräts in der Umgebung umfasst, dass die erste Menge (312) mit der ersten Referenzmenge (212) zur Übereinstimmung gebracht wird.

10. Verfahren nach einem der vorstehenden Ansprüche, weiterhin umfassend:
Bestimmen (416) eines Bewegungspfads (102), auf dem sich das mobile Gerät (100) in der Umgebung (150) bewegen soll, basierend auf der aktuellen Position und/oder Orientierung (414) mobilen Geräts.

11. Verfahren nach Anspruch 10, weiterhin umfassend:

Bestimmen (418), basierend auf dem Bewegungspfad (102) und der aktuellen Position und/oder Orientierung (414), von Steuerungsinformationen zum Bewegen des mobilen Geräts (100), und
Bereitstellen der Steuerungsinformationen und/oder Bewegen des mobilen Geräts (100) basierend auf den Steuerungsinformationen.

**12.** Recheneinheit (110), die dazu eingerichtet ist, die Verfahrensschritte eines Verfahrens nach einem der vorstehenden Ansprüche durchzuführen.

**13.** Mobiles Gerät (100) mit einer Recheneinheit (110) nach Anspruch 10.

**14.** Mobiles Gerät (100) nach Anspruch 13, das als sich zumindest teilweise automatisiert bewegendes Fahrzeug, insbesondere als Personenbeförderungsfahrzeug oder als Güterbeförderungsfahrzeug, oder als Roboter, ausgebildet ist. *[bitte prüfen]*

**15.** Computerprogramm, das eine Recheneinheit (110) veranlasst, ein Verfahren nach einem der Ansprüche 1 bis 11 durchzuführen, wenn es auf der Recheneinheit (110) ausgeführt wird.

**16.** Maschinenlesbares Speichermedium mit einem darauf gespeicherten Computerprogramm nach Anspruch 15.

# Fig. 1

**Fig. 2**

**Fig. 3**

# Fig. 4

Europäisches
Patentamt

European
Patent Office

Office européen
des brevets

# EUROPÄISCHER RECHERCHENBERICHT

**Nummer der Anmeldung**

**EP 23 15 3935**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 012689 A1 (E & K AUTOMATION GMBH [DE]) 6. September 2012 (2012-09-06) * Absätze [0007] – [0024], [0035] – [0045] * * Abbildungen 1-7 * | 1-16 | INV. G01S7/48 G01S17/42 G01S17/46 G01S17/89 G01S17/931 |
| A | DE 10 2010 060942 A1 (SICK AG [DE]) 6. Juni 2012 (2012-06-06) * Absätze [0006] – [0023], [0047] – [0066] * * Abbildung 3 * | 1-16 | G01C21/34 |
| A | DE 10 2009 046109 A1 (IFM ELECTRONIC GMBH [DE]) 5. Mai 2011 (2011-05-05) * Absätze [0005] – [0013], [0022] – [0027] * * Abbildungen 1-3 * | 1-16 | |
| A | DE 10 2020 118629 A1 (BAYERISCHE MOTOREN WERKE AG [DE]) 20. Januar 2022 (2022-01-20) * Absätze [0044] – [0097] * * Abbildung 1A * | 1-16 | |

**RECHERCHIERTE SACHGEBIETE (IPC)**

G01S
G01C

Der vorliegende Recherchenbericht wurde für alle Patentansprüche erstellt

| Recherchenort | Abschlußdatum der Recherche | Prüfer |
|---|---|---|
| München | 23. Juni 2023 | Kruck, Peter |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**EP 4 227 707 A1**

## ANHANG ZUM EUROPÄISCHEN RECHERCHENBERICHT
## ÜBER DIE EUROPÄISCHE PATENTANMELDUNG NR.

EP 23 15 3935

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-06-2023

| Im Recherchenbericht angeführtes Patentdokument | Datum der Veröffentlichung | Mitglied(er) der Patentfamilie | Datum der Veröffentlichung |
|---|---|---|---|
| DE 102011012689 A1 | 06-09-2012 | KEINE | |
| DE 102010060942 A1 | 06-06-2012 | DE 102010060942 A1 | 06-06-2012 |
| | | EP 2461181 A1 | 06-06-2012 |
| | | US 2012140202 A1 | 07-06-2012 |
| DE 102009046109 A1 | 05-05-2011 | KEINE | |
| DE 102020118629 A1 | 20-01-2022 | CN 116194802 A | 30-05-2023 |
| | | DE 102020118629 A1 | 20-01-2022 |
| | | WO 2022012923 A1 | 20-01-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **P. BIBER ; W. STRASSER.** The normal distributions transform: a new approach to laser scan matching. *Proceedings 2003 IEEE/RSJ International Conference on Intelligent Robots and Systems (IROS 2003),* 2003, vol. 3, 2743-2748

- Probabilistic normal distributions transform representation for accurate 3D point cloud registration. **HONG, HYUNKI ; BEOM HEE LEE.** 2017 IEEE/RSJ International Conference on Intelligent Robots and Systems (IROS). IEEE, 2017